# EUROPEAN PATENT SPECIFICATION

(11) **EP 1 166 863 B1**
(45) Date of publication and mention of the grant of the patent: **12.04.2006**
(21) Application number: 01115332.7
(22) Date of filing: 25.06.2001
(51) Int. Cl.: B01J 3/04, B30B 11/00

(54) **Pressure containment system**
Druckgehäusesystem
Systeme de récipient sous pression

(30) Priority: 23.06.2000 US 213971 P
(43) Date of publication of application: 02.01.2002
(73) Proprietor: Hydro-Pac, Inc., Fairview, PA 16415 (US)
(72) Inventor: Robertson, Walter William, Shippenville, PA 16254 (US); Robertson, Jason Lee, Erie, PA 16505 (US)
(74) Representative: Celestino, Marco

(56) References cited:
- EP-A- 0 502 704
- DE-A- 3 833 337
- US-A- 4 279 581
- US-A- 4 629 412
- US-A- 4 968 009
- PATENT ABSTRACTS OF JAPAN vol. 015, no. 069 (M-1083), 19 February 1991 (1991-02-19) & JP 02 293585 A (KOBE STEEL LTD), 4 December 1990 (1990-12-04)

## Description

### Field of the invention

The present invention relates to a pressure vessel for use in hot isostatic pressing.

In particular, but not exclusively, the invention relates to an internally cooled pressure vessel to solidify powders and heal cracks and voids in castings.

### Background of the invention

A pressure vessel may include a cylinder, as well as a closure structure to restrain the end load. The closure structure can be constructed as a threaded end closure or a frame of various designs. Such frame designs include yoke or plate frames; wire wrapped frames and tie rod frames. The cylinder of the pressure vessel can be of a monowall or a multiple wall construction.

When a pressure vessel is externally cooled, a temperature gradient is introduced which can generate stress on the outside diameter of the vessel, leading to fatigue and cracking. Larger and high-pressure vessels are particularly susceptible to thermally induced stresses since they have thicker walls. Due to the nature of heat transfer, a given heat flux (watts per unit area) generates a larger temperature gradient across a thicker wall. This, in turn, induces a higher stress at the outer diameter of the wall. This phenomenon increases fatigue and reduces the life of these pressure vessels and may contribute to failures in the field.

Pressure vessels with internal cooling mechanisms are known in the art. However, these mechanisms are usually employed with penetration of the shell of the vessel. Penetrations in the shell of the vessel are undesirable for a number of reasons. Pressure vessels known in the art, such as wire wrapped vessels do not lend themselves to complete inspection, visually, ultrasonically, or by magnetic particle inspection.

### Summary of the invention

In accordance with the present invention, the pressure vessel includes a high-pressure containment, or cylinder, defining a pressure chamber, a top end flange contacting a top end of the cylinder, a bottom end flange contacting a bottom end of the cylinder. Tie rods are placed into corresponding tie rod holes disposed in the top and bottom flanges. The tie rods and flanges effect closure of opposite ends of the high-pressure cylinder.

The high-pressure cylinder includes a shell. Disposed within the shell is a liner to which temperature moderating means are provided for limiting the stresses on said tie rods owing to rise of temperature within the chamber.

According to one aspect of the invention, the liner floats within the shell and a retaining means is provided allowing axial growth of said liner (16) when temperature rises is said chamber.

Preferably, the retaining means comprise a retainer and a spring arranged between the retainer and the bottom end flange.

Advantageously, the liner is held in place within the cylinder by a slight interference between the larger outside diameter of the liner and the smaller inside diameter of the shell. The liner is not held in place by any other mechanism. To install the liner within the cylinder, the shell is heated. After the liner is installed, the shell is then cooled. The liner is a floating liner, as it is not fixedly attached to any other component of the vessel. The liner can be removed by heating the shell allowing the liner to drop out from the cylinder.

According to another aspect of the invention, cooling grooves are formed in the exterior side of the liner or, alternatively, the grooves are formed in the interior side of the inner shell. Water is pumped into one of the ports of either the bottom or top end flange, travels through the grooves and exits from the ports of either the top or bottom end flange. In use, as the temperature of the liner increases, the water travels through the cooling grooves in the liner to moderate the temperature of the shell. By moderating the temperature of the shell, the axial forces on the end of the flanges are reduced and in turn the stresses on the tie rods are thereby reduced.

Preferably, a top manifold and/or a bottom manifold are positioned between the cylinder and respectively the top end flange assembly and the bottom end flange assembly. The top manifold is in contact with one end of the cylinder and the bottom manifold is in contact with the other end of the cylinder. The top end flange covers the top manifold and the bottom end flange covers the bottom manifold. manifold, travels up through the grooves and exits through the top manifold. Also in this case, for cooling purposes, water is pumped into one of the ports of the bottom manifold, travels through the grooves and exits from one of the ports of the top manifold.

A removable flange may engage the bottom manifold. The bottom manifold engages in turn the lower end flange. A threaded bottom closure engages the lower end flange. When the bottom closure is removed, access to the liner is achieved. When the removable flange on the bottom manifold is then removed, the cooling grooves can be accessed and inspected. Moreover, a high-pressure water blasting lance can be inserted into the cooling grooves and any fouling can be removed therefrom. In addition, the liner can be removed for cleaning by applying modest heat to the outside diameter of the shell.

Given that the liner floats within the cylinder, it exerts only minimal axial force on the end flanges and tie rods. This is so, even though at elevated temperatures, the liner grows axially. The shrink-fitted liner is sized to be held in place or restrained by the axial friction force between the liner and the shell at the liner's upper end. As the liner grows axially, it grows downward into a space defined by the removable flange, liner inner, bottom manifold, and bottom closure. Thus, the liner does not come in contact with the bottom manifold reducing pressure on the bottom end flange and tie rods.

The bottom closure may include a head and a threaded portion. The threaded portion can be fully threaded or, in the alternative, the threads can be interrupted. If interrupted, a fraction of a full turn of the head will permit the removal of the bottom closure from the lower end flange.

Under load, the end flanges will deform or bend. Spherical washers are utilized to prevent the tie rods from bending when the end flange deforms under load. By preloading the tie rods, which restrain the end load, cyclical stress on such parts is reduced, thereby extending their life and reducing fatigue.

Accordingly, it is an object of the present invention to provide an internally cooled pressure vessel, which is not susceptible to the formation of a temperature gradient across the outer wall of the cylinder.

It is an additional object of the present invention to provide a pressure vessel that accomplishes internal cooling of the shell without penetrations to the shell.

It is a further object of the invention to provide a pressure vessel that permits inspection, by visual, ultrasonic and magnetic particle means, including the cooling grooves.

In addition, it is an object of the invention to provide a pressure vessel with a floating liner that can be removed and inspected.

It is also an additional object to provide a pressure vessel that introduces pressure through a separate manifold.

Further it is an object to provide a pressure vessel that avoid stress concentrations due to pressure ports in the shell, closure, and end flanges.

Lastly, it is an object of the present invention to provide a pressure vessel that removes the stress concentration, which occurs at the root of the first thread in a threaded closure.

Additional objects, characteristics and advantages of the invention will emerge from the following description given by way of non-limiting illustrative example with reference to the appended drawings.

### Brief description of the drawings

- Fig. 1 is a perspective view, with some cut-away portions, of the preferred embodiment of the subject invention;
- Fig. 2 is a cross-sectional view of the preferred embodiment of the subject invention;
- Fig. 3a is an enlarged view of the assembled flanges and bottom manifold, the area circled in Fig. 2, of the preferred embodiment of the subject invention;
- Fig. 3b is an enlarged view of another section of the assembled top manifold of the preferred embodiment of the subject invention.
- Fig. 4a is a side view of the bottom flange of the preferred embodiment of the subject invention;
- Fig. 4b is a side view of the bottom closure of the preferred embodiment of the subject invention, showing the relationship of the bottom closure to the bottom flange;
- Fig. 5a is a side cross-sectional view of the bottom flange of the preferred embodiment of the subject invention, while disengaged from the bottom closure;
- Fig. 5b is a side cross-sectional view of the bottom flange of the preferred embodiment of the subject invention, while engaged to the bottom closure;
- Fig. 5c is a side view of the bottom flange of the preferred embodiment of the subject invention, with bottom manifold attached thereto;
- Fig. 6a is a side view of the removable flange of the preferred embodiment of the subject invention;
- Fig. 6b is a side view of a disassembled removable flange and bottom manifold of the preferred embodiment of the subject invention;
- Fig. 6c is a side view of the assembled removable flange and bottom manifold of the preferred embodiment of the subject invention;
- Fig. 7a is a side view of the top manifold of the preferred embodiment of the subject invention;
- Fig. 7b is cross-sectional side view of the top manifold of the preferred embodiment of the subject invention.

### Detailed description of preferred embodiments

For the purpose of promoting an understanding of the present invention, reference will be made to a preferred embodiment of an internally cooled pressure vessel as illustrated in the drawings. It will nevertheless be understood that no limitations of the scope of the invention is thereby intended by such alterations as changing the size, the placement and numbers of ports or the geometry of the components. It is contemplated that such alterations would fall within the spirit and scope of the invention described herein. With particular reference to the drawings, the reader should understand that like numerals in different figures refer to the same elements of the invention.

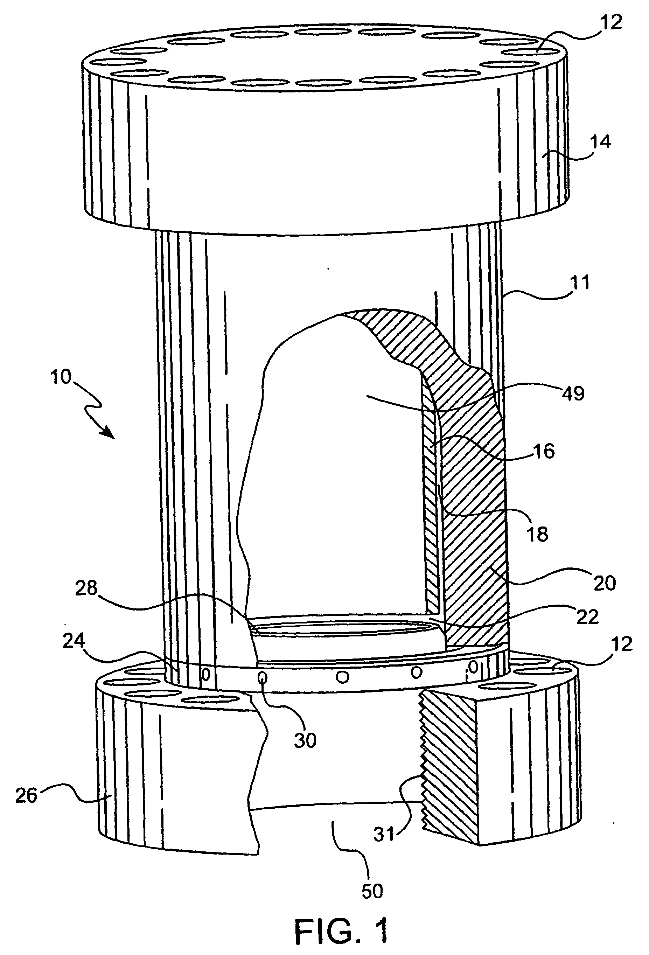

Figs 1 through 7b show a pressure vessel 10 and components comprising a preferred embodiment of the present invention.

Fig. 1 depicts perspective view with some cut-away portions of the preferred embodiment. In Fig. 1 it can be appreciated that the pressure vessel 10, which includes high pressure cylinder 11, defines a high isostatic high pressure chamber 49. Cylinder 11 includes inner shell 20. Pressure vessel 10 also includes top end flange 14, bottom end flange 26, as well as top end manifold 36 (not visible in fig. 1) and bottom manifold 24 in which is nested a removable flange 28. Cylinder 11 is positioned between top flange 14 and bottom flange 26.

As shown in Fig. 1 a bottom manifold 24 has ports 30 and a removable flange 28 located at its top. As shown in Fig. 1 bottom manifold 24 has ports 30. As seen in Fig. 1, one end of cylinder 11 is in contact with top manifold 36, while the other end of cylinder 11 is in contact with bottom manifold 24.

Tie rod holes 12 can be appreciated at the top flange 14 and bottom end flange 26. Tie rods 34 and end flanges 14 and 26 along with bottom closure 40 effect closure of cylinder 11.

Disposed within cylinder 11 is liner 16. Cooling channels, and in particular cooling grooves 18, are most preferably formed in liner 16. As one of ordinary skill in the art will readily appreciate, cooling grooves 18 can be axially machined in shell 20, or formed by separate pieced lengthwise spacing strips installed between liner 16 and shell 20. Moreover, cooling grooves 18 need not be axial. Alternatively, cooling grooves 18 can be helical, which would necessitate the use of a flexible borescope for inspection, and a flexible water blast lance for cleaning.

Water is pumped into bottom manifold 24, through one of ports 30 and travels through cooling grooves 18 and exits through one of ports 38 in top manifold 36.

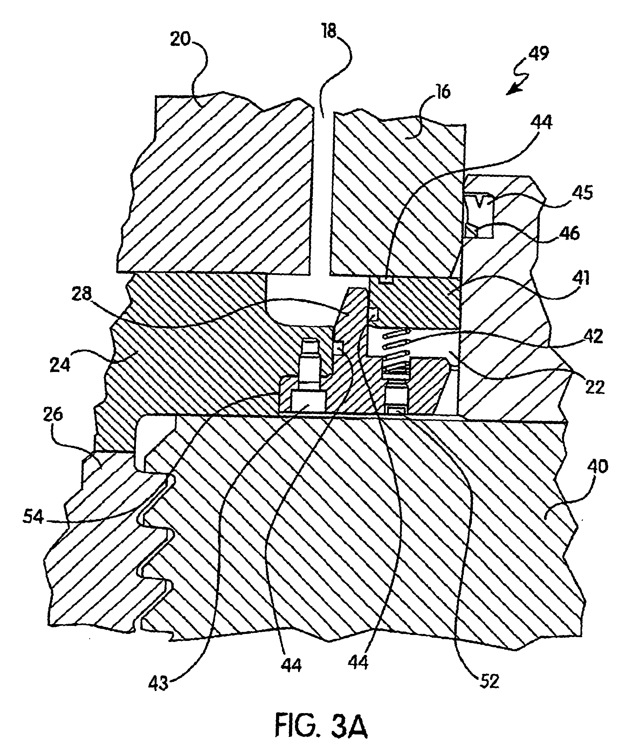

Liner 16 is held in place within cylinder 11 in view of a slight interference between the larger outside diameter of liner 16 and the smaller inside diameter of shell 20. When shell 20 is heated, liner 16 can be installed within cylinder 11. Shell 20 is then cooled. As such, liner 16 is said to be shrink-fit within cylinder 11. In use, as the temperature of liner 16 increases, the water traveling through cooling grooves 18 moderates the temperature of shell 20. By moderating the temperature of shell 20, the axial forces on end flanges 14 and 26, and, in turn, tie rods 34, are minimized. The stresses on tie rods 34 are thereby reduced. Liner 16 floats within cylinder 11. As such, liner 16 cannot exert any additional axial force on end flanges 14 and 26 and tie rods 34. This is so even though at elevated temperatures, liner 16 grows axially. Liner 16 is sized to be held in place or restrained by the axial friction force between liner 16 and shell 20 at the upper end of liner 16. As liner 16 grows axially, it grows toward, but does not come in contact with bottom manifold 24, in view of space 22, as shown in Fig. 3a.

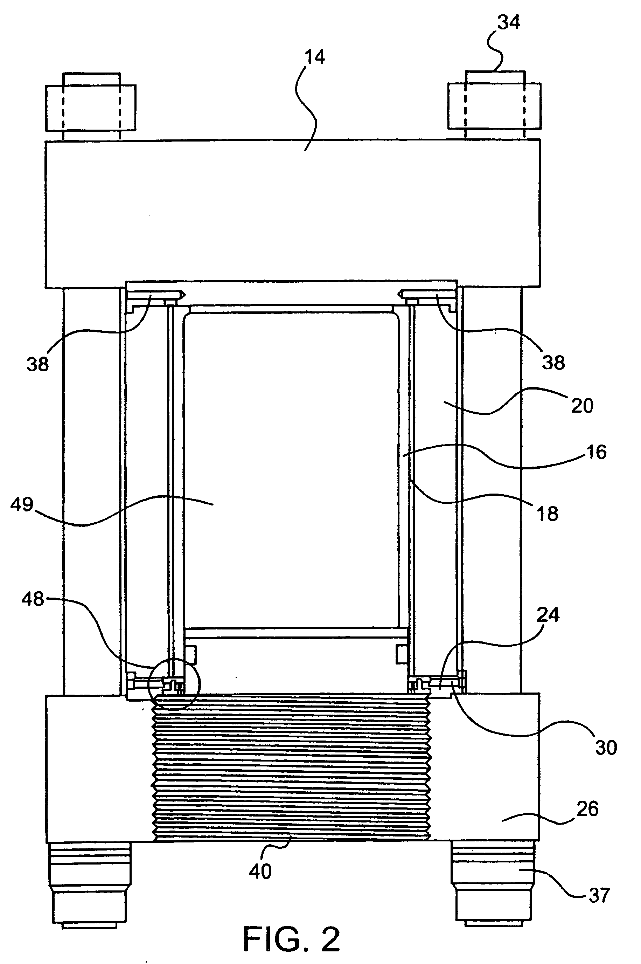

Fig. 2 is a cross sectional view of the preferred embodiment of the subject invention. It will be noticed that both top manifold 36 and bottom manifold 24 have ports 30 and 38. Fig. 2 demonstrates the bottom closure 40, having threads 31, which threadably engages lower end flange 26. When bottom closure 40 is removed, access to liner 16, as well as cooling grooves 18, is achieved allowing for inspection of the parts.

The process by which cooling is accomplished in the pressure vessel can also be appreciated in Fig.2. Mainly, a cooling liquid is pumped into bottom manifold 24 through one of ports 30 and travels through cooling grooves 18 and exits through one of ports 38 in top manifold 36. In a preferred embodiment such cooling liquid is water.

Fig. 3a shows an enlarged view of the assembled bottom flanges and manifold of the area circle 48 in Fig. 2. Once more it can be appreciated the relationship between the shell 20, the cooling groove 18, the liner 16, and the isostatic high pressure chamber 49. Removable flange 28 is held in place by screw 43. The opening of bottom closure 40, removal of screw 43 and removable flange 28 from bottom manifold 24 allows for visual inspection of cooling grooves 18 without having to dismantle the whole pressure vessel. Inspection can also be accomplished by ultrasonic and magnetic particle means. If necessary a high-pressure water-blasting lance can be inserting into each of grooves 18 and any fouling can be removed therefrom. In addition, liner 16 can be removed from cylinder 11 for cleaning by applying modest heat to the outside diameter of cylinder 11 allowing liner 16 to drop from cylinder 11.

Figure 3a also shows the sealing of the isostatic high-pressure chamber 49 by elastomer seal 45 and anti-extrusion ring 46. At high pressure and heat the elastomer seal 45 liquefies and the anti-extrusion ring 46 keeps it in place sealing the isostatic high pressure chamber from leaks of pressurizing gas or cooling water. Also o-rings seals 44 can be provided through the region of the cooling groove 18 and liner 16, to prevent cooling liquid from leaking. The retainer spring 42 and retainer 41 can also be appreciated in Fig. 3a. These allow for the axial growth of liner 16 into space 22 when temperature rises without the application of additional pressures on the end flanges 14 and 26 and tie rods 34.

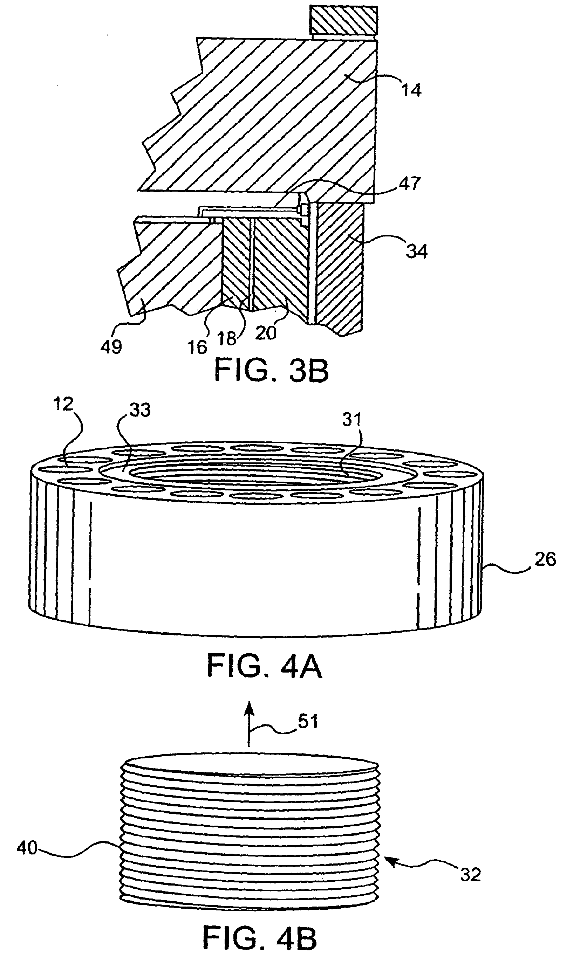

Fig. 3b shows an enlarged view of a section of the assembled top manifold of the preferred embodiment of the subject invention. The port 47 shown in this section provides access for the introduction of pressurizing gas into the isostatic high-pressure chamber 49. The same port 47 is also used for venting of the isostatic high-pressure chamber 49. The number of ports on the top manifold 36 used for cooling and for pressure introduction and venting can be varied.

Fig. 4a and 4b show side views of the bottom flange and the relationship of the bottom closure to the bottom flange of the preferred embodiment of the subject invention. Bottom closure 40 can be fully threaded, as shown in Fig. 4b, or, in the alternative, threads 32 can be interrupted. If interrupted, a fraction of a full turn of closure threads 32 will permit the removal of bottom closure 40 from lower end flange 26. Arrow 51 points to insertion point into bottom flange 26. It can also be appreciated in the bottom flange 26 a recess 33 for mating with bottom manifold 24. The top ends flange 14 also posses such recess.

In a preferred embodiment guide rods (not shown) will be present in top flange 14, bottom flange 26 and closure 40 to proper guide the assembly of all parts. Also carrying screws can be present in the bottom closure 40 to facilitated handling.

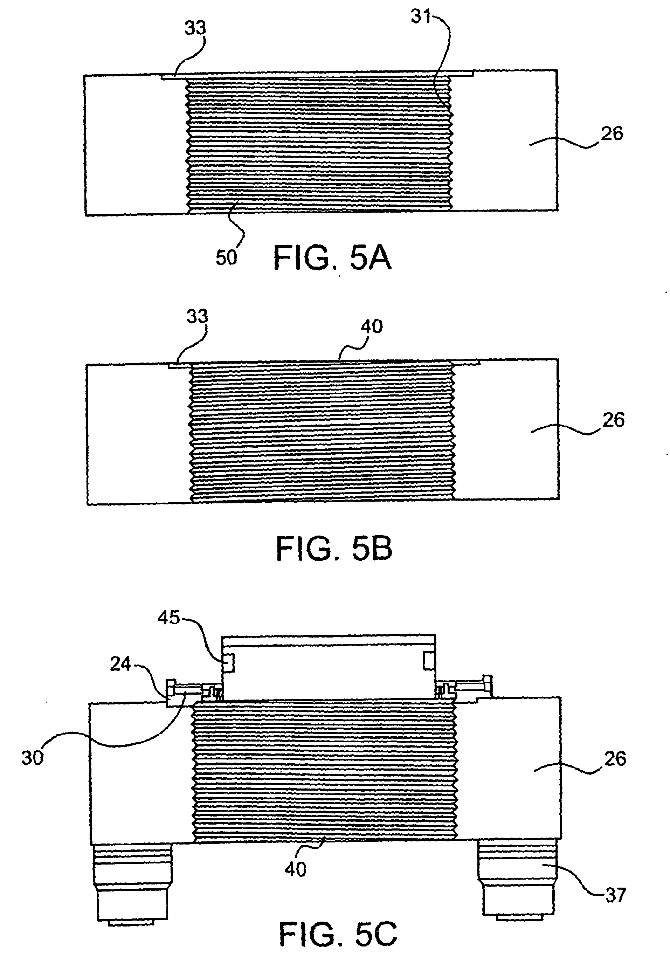

In figs. 5a to 5c a cross-sectional view of the bottom flange 26 of the preferred embodiment of the subject invention can be appreciated at different stages of assembly, from absence of bottom closure 40 to complete assembly with bottom manifold 24. In fig. 5c spherical washers 37 are shown which are preferably used to prevent the tie rods 34 from bending when the end flange 26 deforms under load.

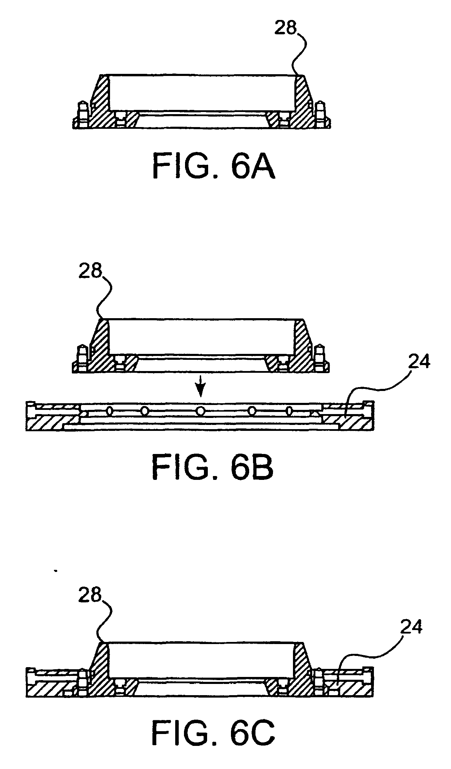

The figs. 6a to 6c show side views of the removable flange 28 at different stages of assembly with the corresponding bottom manifold 24 of the preferred embodiment of the subject invention.

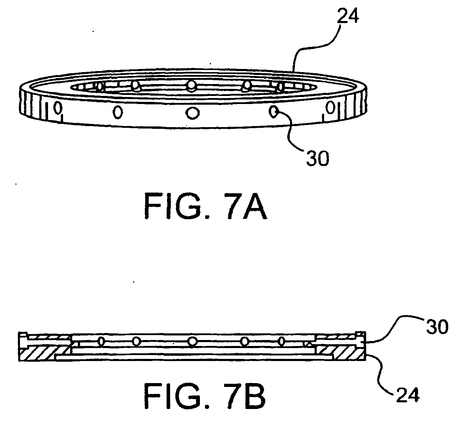

Figs. 7a and 7b show a side view and a cross sectional view of the top manifold 36 respectively of the preferred embodiment of the subject invention. It.can be appreciated in these figures that in the top manifold not all the ports have the same function. Ports 30 are in charge of liquid cooling introduction to cool the upper section of the chamber, ports 38 are for the exit of the cooling liquid .and finally some of the ports 47 are for the introduction and venting of pressure from the isostatic high pressure chamber of the high pressure vessel.

In view of the above, inspecting and cleaning the vessel can be carried out by:
- removing the bottom closure 40,
- removing the bottom manifold 24,
- removing the removable flange 28,
- inserting an inspection device into the grooves 18, and
- inserting a cleaning device into the grooves 18.
   Further steps may be provided of
   heating the containment 11,
- dropping the liner 16 from within the inner shell 20 and
- inspecting and cleaning the liner 16 and the containment 11.

Notwithstanding reference has been made to a pressure vessel 10 with top and bottom manifolds having a plurality of ports, it is clear to a man skilled in the art that such manifolds can be omitted and that such ports can be created directly in the top and bottom end flanges. A retaining means can be used between the bottom end of the cylinder 11 and the bottom end flange, for example comprising a retainer and a spring supporting the retainer, similar to retainer 41 and spring 42 of fig. 3a. Also in this case, the retainer and the spring would allow for the axial growth of liner 16 when temperature rises without the application of additional pressures on the end flanges 14 and 26 and tie rods 34.

The foregoing description of a specific embodiment will so fully reveal the invention according to the conceptual point of view, so that others, by applying current knowledge, will be able to modify and/or adapt for various applications such an embodiment without further research and without parting from the invention, and it is therefore to be understood that such adaptations and modifications will have to be considered as equivalent to the specific embodiment. The means and the materials to realise the different functions described herein could have a different nature without, for this reason, departing from the field of the invention. It is to be understood that the phraseology or terminology employed herein is for the purpose of description and not of limitation.

## Claims

1. A pressure vessel (10) comprising:
- a pressure containment (11) with a top and a bottom end and side walls, forming a pressure chamber (49), said top end and said bottom end being open; said containment (11) having a shell (20) and a liner (16),
- a top end flange (14) contacting said top end of said containment (11), containing within said top end flange (14) a plurality of ports (30), said top end flange (14) having portions defining a plurality of holes (12);
- a bottom end flange (26) containing within said bottom end flange (26) a plurality of ports (38), said bottom end flange (26) having portions defining a plurality of holes (12),and
- a plurality of tie rods (34) with each one of said tie rods (34) residing simultaneously within one of said top flange holes (12) and one of said bottom flange holes (12),
- temperature moderating means associated to said liner (16) for limiting the stresses on said tie rods (34) in the event of temperature rising within said pressure chamber (99).

2. A pressure vessel (10) according to claim 1, wherein said temperature moderating means associated to said liner for limiting the stresses on said tie rods (34) comprise retaining means (41,42,24) contacting one end of said liner (16), allowing axial growth of said liner (7.6) when temperature rises.

3. A pressure vessel (10) according to claim 2, wherein said retaining means comprise:
- a retainer (41) contacting said bottom end of said liner (16) of said containment (11),
- a retainer spring (42) supporting said retainer (41).

4. A pressure vessel (10) according to claim 1, wherein said temperature moderating means associated to said liner for limiting the stresses on said tie rods (34) comprise a plurality of cooling channels (18) provided between said liner and said shell, whereby cooling liquid can be pumped through one of said ports (30,38) of one of said flanges (14,26), travels through said cooling channels and exits through one of said ports (38,30) of the other of said flanges (26,14).

5. A high pressure vessel (10) according to any of the previous claims, wherein cooling channels are formed between said shell and said liner, said channels being chosen among:
- axial grooves (18) machined in the surface of said shell (20) ;
- axial grooves (18) machined in the surface of liner (16);
- axial spaces defined by lengthwise spacing strips installed between said liner (16) and shell (20);
- helical grooves (18) machined in the surface of said shell (20);
- helical grooves (18) machined in the surface of liner (16);
- helical spaces defined by spacing strips installed between said liner (16) and shell (20).

6. A pressure vessel (10) according to any of the previous claims, wherein a bottom manifold (24) is provided having a top section, a bottom section, and a side wall, said side wall having said plurality of ports (38) and said bottom section contacting said bottom end.

7. A pressure vessel (10) according to any of the previous claims further comprising:
- a top manifold (36) having a top section, a bottom section, and a side wall, said side wall having said plurality of ports (30), said bottom section contacting said top end, said top end flange (14) having a recess for mating with said top manifold (36) at top end of said containment (11).

8. A high pressure vessel (10) according to claim 6 in which a removable flange (28) is located at the top of said bottom manifold (24) at said pressure chamber (49) of said containment (11), thereby creating a space (22) between said bottom end flange (26) and said bottom manifold (24).

9. A high pressure vessel (10) according to any of the previous claims, wherein said liner (16) is a floating liner (16) held in place by an interference between the larger outside diameter of said liner (16) and the smaller inside diameter of said shell (20).

10. A high pressure vessel (10) according to any of the previous claims, wherein said bottom end flange (26) is substantially annular, a bottom closure (40) being provided engaging with said bottom end flange (26).

11. A method of inspecting and cleaning a pressure vessel (10) according to claim 8, comprising the steps of:
- removing said bottom manifold (24),
- inserting an inspection device into said grooves (18), and
- inserting a cleaning device into said grooves (18).

12. The method of inspection and cleaning of claim 11 further comprising:
heating said containment (11),
- dropping said liner (16) from within said inner shell (20) and
- inspecting and cleaning said liner (16) and said containment (11).

## Patentansprüche

1. Druckgefäß (10), mit:
- einem Druckbehälter (11) mit einem oberen und unteren Ende und Seitenwänden, der eine Druckkammer (49) bildet, wobei das obere und untere Ende offen sind, und der Behälter (11) einen Mantel (20) und eine Auskleidung (16) aufweist,
- einem oberen Endflansch (14), der mit dem oberen Ende des Behälters (11) in Kontakt steht, wobei in dem oberen Endflansch (14) mehrere Öffnungen bzw. Anschlüsse (30) enthalten sind und der obere Endflansch (14) mehrere Löcher (12) festlegende Abschnitte aufweist,
- einem unteren Endflansch (26), wobei in dem unteren Endflansch (26) mehrere Öffnungen bzw. Anschlüsse (38) enthalten sind und der untere Endflansch (26) mehrere Löcher (12) festlegende Abschnitte aufweist, und
- mehreren Zugstangen (34), wobei jede der Zugstangen (34) gleichzeitig in einem der Löcher des oberen Flansches (12) und einem der Löcher (12) des unteren Flansches aufgenommen ist,
- der Auskleidung (16) zugeordnete Temperaturmäßigungsmittel zum Begrenzen der Belastungen auf die Zugstangen (34) im Fall eines Temperaturanstiegs in der Druckkammer (49).

2. Druckgefäß (10) nach Anspruch 1, wobei das der Auskleidung zugeordnete Temperaturmäßigungsmittel zum Begrenzen der Belastungen auf die Zugstangen (34) Rückhaltemittel (41,42,24) umfaßt, die mit einem Ende der Auskleidung (16) in Kontakt stehen und ein axiales Wachstum bzw. eine axiale Dehnung der Auskleidung (16) gestatten, wenn die Temperatur ansteigt.

3. Druckgefäß (10) nach Anspruch 2, wobei die Rückhaltemittel umfassen:
- ein Rückhalteelement (41), das mit dem unteren Ende der Auskleidung (16) des Behälters (11) in Kontakt steht,
- eine Rückhaltefeder (42), die das Rückhalteelement (41) haltert.

4. Druckgefäß (10) nach Anspruch 1, wobei das der Auskleidung zugeordnete Temperaturmäßigungsmittel zum Begrenzen der Belastungen auf die Zugstangen (34) mehrere Kühlkanäle (18) umfaßt, die zwischen der Auskleidung und dem Mantel vorgesehen sind, wodurch Kühlflüssigkeit durch eine der Öffnungen (30,38) eines der Flansche (14,26) gepumpt werden kann, die Kühlkanäle durchströmt und über eine der Öffnungen (38,30) des anderen der Flansche (26,14) austritt.

5. Hochdruckgefäß (10) nach einem der vorangehenden Ansprüche, wobei Kühlkanäle zwischen dem Mantel und der Auskleidung ausgebildet sind und die Kanäle ausgewählt werden aus:
- in die Oberfläche des Mantels (20) eingebrachten Axialnuten bzw. -rillen (18),
- in die Oberfläche der Auskleidung (16) eingebrachten Axialnuten bzw. -rillen (18),
- axialen Zwischenräumen, die durch zwischen der Auskleidung (16) und dem Mantel (20) angebrachten, in Längsrichtung verlaufenden Abstandsstreifen festgelegt sind bzw. werden,
- in die Oberfläche des Mantels (20) eingebrachten Spiralnuten bzw. -rillen (18),
- in die Oberfläche der Auskleidung (16) eingebrachten Spiralnuten bzw. -rillen (18),
- spiralförmigen Zwischenräumen, die durch zwischen der Auskleidung (16) und dem Mantel (20) angebrachten Abstandsstreifen festgelegt sind bzw. werden.

6. Druckgefäß (10) nach einem der vorangehenden Ansprüche, wobei ein unterer Verteiler (24) mit einem oberen Abschnitt, einem unteren Abschnitt und einer Seitenwand vorgesehen ist, wobei die Seitenwand mehrere Öffnungen (38) hat und der untere Abschnitt mit dem untern Ende in Kontakt steht.

7. Druckgefäß (10) nach einem der vorangehenden Ansprüche, ferner mit:
- einem oberen Verteilerrohr (36) mit einem oberen Abschnitt, einem unteren Abschnitt und einer Seitenwand, wobei die Seitenwand die mehreren Öffnungen (30) aufweist, der untere Abschnitt mit dem oberen Ende in Kontakt steht, und der obere Endflansch (14) eine Ausnehmung aufweist, um mit dem oberen Verteilerrohr (36) am oberen Ende des Behälters (11) zusammenzupassen.

8. Hochdruckgefäß (10) nach Anspruch 6, wobei sich ein abnehmbarer Flansch (28) an der Oberseite des unteren Verteilerrohrs (24) an der Druckkammer (49) des Behälters (11) befindet, wodurch ein Zwischenraum (22) zwischen dem unteren Endflansch (26) und dem unteren Verteilerrohr (24) erzeugt wird.

9. Hochdruckgefäß (10) nach einem der vorangehenden Ansprüche, wobei die Auskleidung (16) eine schwimmende Auskleidung (16) ist, die durch eine Interferenz bzw. Überschneidung zwischen dem größeren Außendurchmesser der Auskleidung (16) und dem kleineren Innendurchmesser des Mantels (20) an Ort und Stelle gehalten wird.

10. Hochdruckgefäß (10) nach einem der vorangehenden Ansprüche, wobei der untere Endflansch (26) im wesentlichen ringförmig ist und ein Bodenverschluss (40) in Eingriff mit dem unteren Endflansch (26) vorgesehen ist.

11. Verfahren zum Inspizieren und Reinigen eines Druckgefäßes (10) nach Anspruch 8, mit den folgenden Schritten:
- Entfernen des unteren Verteilerrohrs (24),
- Einsetzen eines Inspektionsgeräts in die Nuten bzw. Rillen (18), und
- Einsetzen eines Reinigungsgeräts in die Nuten (18).

12. Verfahren zum Inspizieren und Reinigen nach Anspruch 11, ferner umfassend:
- Erwärmen des Behälters (11),
- Fallenlassen der Auskleidung (16) von dem inneren Mantel (20), und
- Inspizieren und Reinigen der Auskleidung (16) und des Behälters (11).

## Revendications

1. Récipient à pression (10) comprenant :
- un conteneur à pression (11) avec des extrémités supérieure et inférieure et des parois latérales, formant une chambre à pression (49), ladite extrémité supérieure et ladite extrémité inférieure étant ouvertes ; ledit conteneur (11) ayant une enveloppe (20) et une doublure (16),
- un rebord d'extrémité supérieure (14) en contact avec ladite extrémité supérieure dudit conteneur (11), contenant à l'intérieur dudit rebord d'extrémité supérieure (14) une pluralité de ports (30), ledit rebord d'extrémité supérieure (14) ayant des parties définissant une pluralité d'orifices (12) ;
- un rebord d'extrémité inférieure (26) contenant à l'intérieur dudit rebord d'extrémité inférieure (26) une pluralité de ports (38), ledit rebord d'extrémité inférieure (26) ayant des parties définissant une pluralité d'orifices (12), et
- une pluralité de barres de connexion (34), chacune desdites barres de connexion (34) résidant simultanément à l'intérieur de l'un desdits orifices de rebord supérieur (12) et de l'un desdits orifices de rebord inférieur (12),
- des moyens de modération de température associés à ladite doublure (16) permettant de limiter les contraintes sur lesdites barres de connexion (34) au cas où la température augmente à l'intérieur de ladite chambre à pression (49).

2. Récipient à pression (10) selon la revendication 1, dans lequel lesdits moyens de modération de température associés à ladite doublure permettant de limiter les contraintes sur lesdites barres de connexion (34) comprennent des moyens de retenue (41, 42, 24) en contact avec une extrémité de ladite doublure (16) permettant une croissance axiale de ladite doublure (16) lorsque la température augmente.

3. Récipient à pression (10) selon la revendication 2, dans lequel lesdits moyens de retenue comprennent :
- un rétenteur (41) en contact avec ladite extrémité inférieure de ladite doublure (16) dudit conteneur (11),
- un ressort de retenue (42) supportant l'élément de fixation (41).

4. Récipient à pression (10) selon la revendication 1, dans lequel lesdits moyens de modération de température associés à ladite doublure permettant de limiter les contraintes sur lesdites barres de connexion (34) comprennent une pluralité de canaux de refroidissement (18) prévus entre ladite doublure et ladite enveloppe, de sorte que du liquide de refroidissement peut être pompé à travers l'un desdits ports (30, 38) de l'un desdits rebords (14, 26), circuler à travers lesdits canaux de refroidissement et sortir par l'un desdits ports (38, 30) de l'autre desdits rebords (26,14).

5. Récipient à haute pression (10) selon l'une quelconque des revendications précédentes, dans lequel les canaux de refroidissement sont formés entre ladite enveloppe et ladite doublure, lesdits canaux étant choisis parmi :
- des rainures axiales (18) usinées sur la surface de ladite enveloppe (20) ;
- des rainures axiales (18) usinées sur la surface de la doublure (16) ;
- des espaces axiaux définis par des bandes d'espacement en longueur installées entre lesdites doublure (16) et enveloppe (20) ;
- des rainures en hélice (18) usinées sur la surface de ladite enveloppe (20) ;
- des rainures en hélice (18) usinées sur la surface de la doublure (16) ;
- des espaces en hélice définis par des bandes d'espacement installées entre lesdites doublure (16) et enveloppe (20).

6. Récipient à pression (10) selon l'une quelconque des revendications précédentes, dans lequel un collecteur inférieur (24) est prévu, ayant une section supérieure, une section inférieure et une paroi latérale, ladite paroi latérale ayant ladite pluralité de ports (38) et ladite section inférieure étant en contact avec ladite extrémité inférieure.

7. Récipient à pression (10) selon l'une quelconque des revendications précédentes, comprenant en outre :
- un collecteur supérieur (36) ayant une section supérieure, une section inférieure et une paroi latérale, ladite paroi latérale ayant ladite pluralité de ports (30), ladite section inférieure étant en contact avec ladite extrémité supérieure, ledit rebord d'extrémité supérieure (14) ayant un évidement correspondant audit collecteur supérieur (36) au niveau de l'extrémité supérieure dudit conteneur (11).

8. Récipient à haute pression (10) selon la revendication 6, dans lequel un rebord amovible (28) est situé au sommet dudit collecteur inférieur (24) au niveau de ladite chambre à pression (49) dudit conteneur (11), créant de cette manière un espace (22) entre ledit rebord d'extrémité inférieure (26) et ledit collecteur inférieur (24).

9. Récipient à haute pression (10) selon l'une quelconque des revendications précédentes, dans lequel ladite doublure (16) est une doublure flottante (16) maintenue en place par une interférence entre le diamètre extérieur plus grand de ladite doublure (16) et le diamètre intérieur plus petit de ladite enveloppe (20).

10. Récipient à haute pression (10) selon l'une quelconque des revendications précédentes, dans lequel ledit rebord d'extrémité inférieure (26) est sensiblement annulaire, une fermeture inférieure (40) étant prévue en prise avec ledit rebord d'extrémité inférieure (26).

11. Procédé d'inspection et de nettoyage d'un récipient à pression (10) selon la revendication 8, comprenant les étapes consistant à :
- enlever ledit collecteur de fond (24),
- insérer un dispositif d'inspection dans lesdites rainures (18), et
- insérer un dispositif de nettoyage dans lesdites rainures (18).

12. Procédé d'inspection et de nettoyage selon la revendication 11, comprenant en outre :
- le chauffage dudit conteneur (11),
- l'enlèvement de ladite doublure (16) de l'intérieur de ladite enveloppe interne (20), et
- l'inspection et le nettoyage de ladite doublure (16) et dudit conteneur (11).
